# DEMANDE DE BREVET EUROPEEN

(11) **EP 0 821 151 A1**
(43) Date de publication de la demande: **28.01.1998**
(21) Numéro de dépôt: 97401721.2
(22) Date de dépôt: 17.07.1997
(51) Int. Cl.: F02K 1/70

(54) **Inverseur de poussée de turboréacteur à portes comportant un panneau coulissant**

(30) Priorité: 18.07.1996 FR 9608991
(71) Demandeur: Hispano-Suiza, 75015 Paris (FR)
(72) Inventeur: Lardy, Pascal, 76600 - Le Havre (FR); Valleroy, Laurent Georges, 76600 - Le Havre (FR)

(57) **Abrégé**

Un inverseur de poussée de turboréacteur comporte des portes (7) pivotantes, intégrées en jet direct dans la paroi extérieure du conduit de flux et formant des obstacles de déviation en jet inversé. Chaque porte (7) est constituée d'un volet pivotant (20) et d'un panneau (21) disposé en superposition avec le volet (20) en jet direct et susceptible de coulisser par rapport au volet de manière à contribuer à la déviation du flux inversé.

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autres cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

Nous appellerons capotage extérieur l'ensemble constitué par la paroi extérieure de la nacelle.

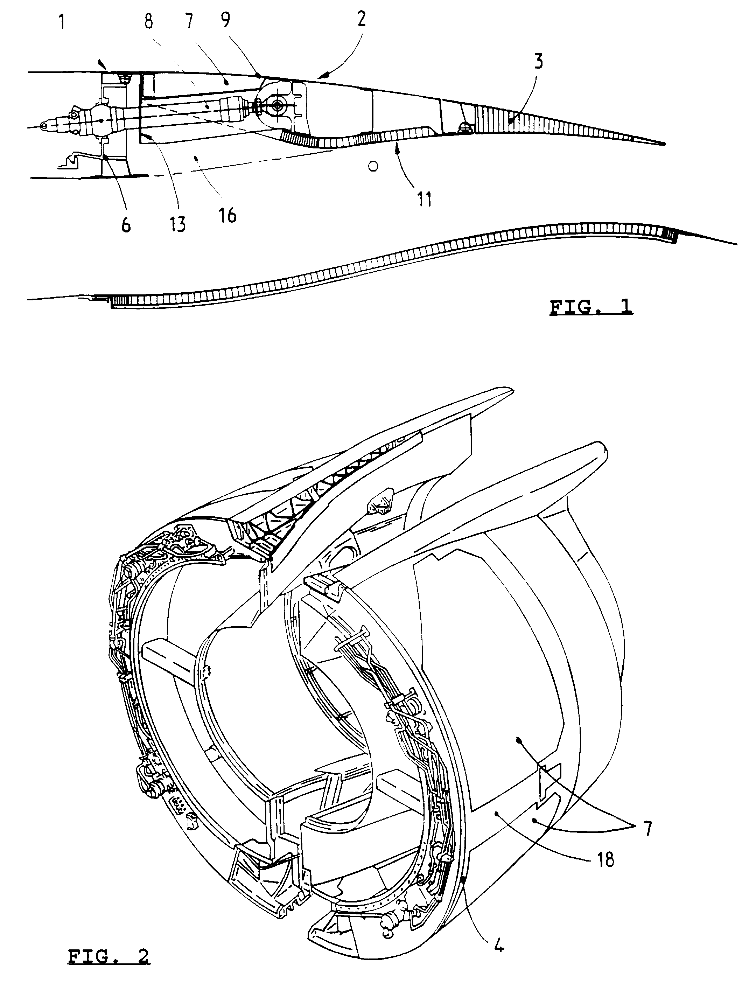

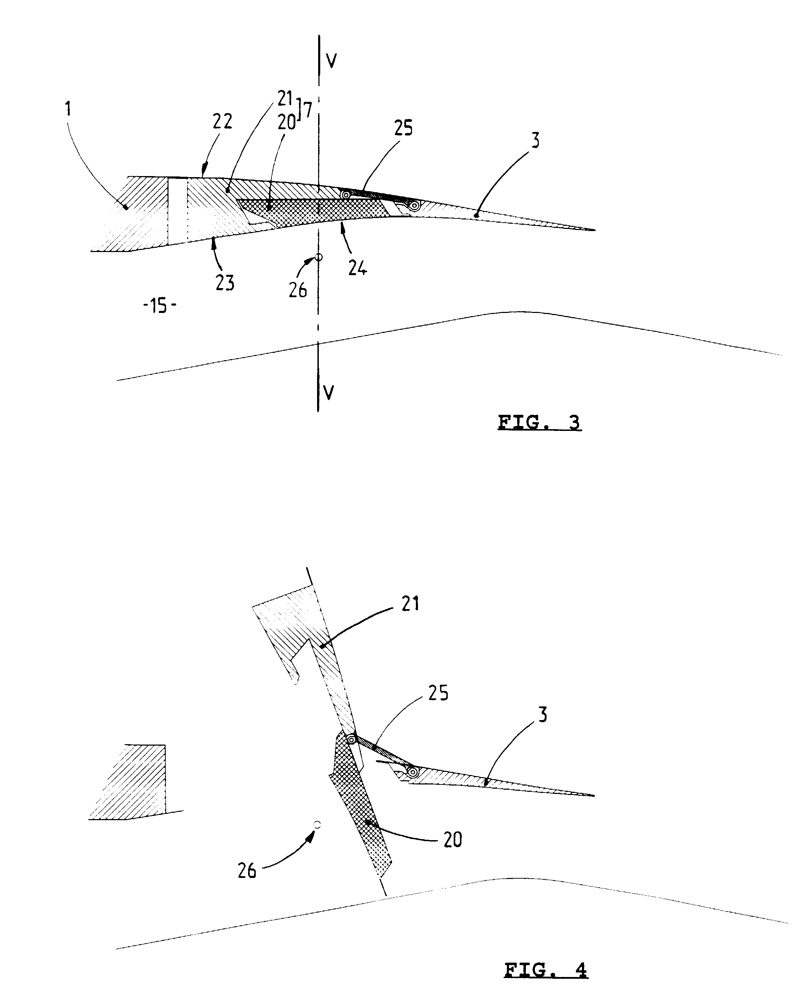

La figure 1 des dessins joints montre un exemple connu de réalisation d'un inverseur de poussée de ce type, appliqué comme le montre la vue schématique partielle en perspective de la figure 2, à un turboréacteur à double flux.

Le dispositif d'inversion est constitué de portes 7 formant une partie mobile 2 et constituant en position inactive, lors d'un fonctionnement en jet direct, une partie du capotage extérieur, et d'une structure fixe réalisant ce capotage extérieur en amont des portes, par une partie amont 1 en aval des portes par une partie aval 3 et entre les portes 7 par l'intermédiaire de poutres 18 qui relient la partie aval 3 du capotage extérieur à la partie amont 4 du capotage extérieur. Les portes 7 sont montées sur une circonférence du capotage extérieur et sont montées pivotantes dans une zone intermédiaire de leurs parois latérales sur les poutres 18 situées de part et d'autre de ces portes, ces parois latérales constituant avec les parois amont et aval, les parois qui relient la partie extérieure 9 des portes 7, qui constituent une partie de la paroi extérieure de la nacelle, à la partie intérieure 11 des portes 7, qui constituent une partie de la paroi extérieure du conduit.

La partie amont 1 de structure fixe comporte un cadre avant 6 qui sert de support aux moyens de commande des déplacements des portes 7, constitués par exemple par des vérins 8.

En position activée, les portes 7 basculent de telle façon que la partie des portes situées en aval des pivots, vient obstruer plus ou moins totalement le conduit, et de telle façon que la partie amont des portes vient dégager un passage dans le capotage extérieur de manière à permettre au flux secondaire d'être canalisé radialement par rapport à l'axe du conduit. La partie amont des portes 7 fait saillie à l'extérieur du capotage extérieur pour des raisons de dimensionnement du passage qui doit être capable de laisser passer ce flux sans compromettre le fonctionnement du moteur. L'angle de pivotement des portes est ajusté de manière à permettre le passage du flux et de manière à supprimer la poussée de ce flux, voire à commencer à générer une contre poussée en générant une composante du flux dévié vers l'amont.

Les portes 7 sont également munies dans leur partie amont d'un becquet 13 faisant saillie vers l'avant, lorsque les portes 7 sont déployées, par rapport à la face interne des portes, de manière à dévier le flux vers l'amont et achever d'obtenir la composante de contre poussée.

Des exemples connus de réalisation sont illustrés par exemple par FR 1 482 538 ou par FR-A-2 030 034.

Il existe aussi des dispositifs tels que celui décrit par US 3 605 411 qui permettent d'avoir une saillie de becquet vers l'amont lorsque les portes sont déployées tout en permettant une continuité de la paroi externe du conduit lorsque les portes ne sont pas déployées. On connaît également par FR-A-2 618 853 un dispositif où le becquet est escamoté en jet direct de façon à optimiser les performances du moteur.

Dans certaines applications, comme représenté sur la figure 1, les becquets 13 font saillie par rapport à la face interne 11 des portes 7, même en jet direct sans pour autant faire saillie dans le conduit qui est dans cet exemple muni de cavités 16 légèrement préjudiciables aux performances du moteur alors que le dispositif d'inversion devient extrêmement simple.

La combinaison des becquets et des bords de déviation permettent également d'optimiser la direction d'éjection du flux comme indiqué par FR-A-2 680 547.

Enfin la commande des portes d'une position à une autre par vérin est connue en soi, nous noterons cependant la solution très simple où il y a un vérin par porte fixé dans sa partie amont à la structure fixe amont du capotage extérieur, et dans sa partie aval à la porte en un point situé dans la partie amont comme décrit par exemple par FR 1 482 538.

Un des buts de l'invention est d'assurer une continuité des lignes aérodynamiques de nacelle lors du fonctionnement en jet direct, à la fois sur la surface externe et sur la surface délimitant le conduit de soufflante grâce à un lissage de la veine du flux secondaire sans présence de cavité préjudiciable aux performances. Un autre but est également de déterminer une longueur optimale de l'ouverture dégagée dans le capotage extérieur lors du fonctionnement en inversion de poussée ou puits d'inversion, sans les contraintes imposées par la longueur des obstacles obstruant le conduit. Le dimensionnement doit en outre permettre d'éviter les problèmes d'interférence avec le sol, le mât ou l'aile de l'avion lors du passage en position d'inversion de poussée. Les moyens retenus doivent permettre d'accroître la sécurité de fonctionnement tout en réduisant la masse et en améliorant les performances.

Ces buts sont atteints conformément à l'invention par un inverseur de poussée du type précité caractérisé en ce que chaque porte est constituée d'un volet pivotant et d'au moins un panneau disposé en jet direct au moins partiellement en superposition avec ledit volet et susceptible de coulisser par rapport audit volet de manière à contribuer à la déviation du flux inversé, en position d'inversion de poussée.

Suivant un premier mode de réalisation, le panneau coulissant présentant une forme dite à sabot recouvre en jet direct le volet pivotant et assure la continuité des lignes aérodynamiques de nacelle à la fois sur la surface externe et sur la surface délimitant le canal de veine de flux secondaire en se raccordant en amont à la partie fixe d'inverseur et en aval à la surface interne dudit volet.

Dans cette réalisation, avantageusement, ledit panneau coulissant est relié par au moins une bielle à la partie aval fixe de l'inverseur, panneau et volet étant munis de rail et glissière coopérant pour assurer le guidage et le coulissement de l'un par rapport à l'autre.

Suivant un deuxième mode de réalisation, un premier et un deuxième panneaux coulissants sont disposés en jet direct au moins partiellement sous le volet pivotant qui assure la continuité de la ligne externe de nacelle et lors de l'ouverture de l'inverseur le pivotement du volet est accompagné d'un coulissement du premier panneau vers l'axe géométrique de rotation du turboréacteur et d'un coulissement du deuxième panneau vers l'extérieur de la nacelle.

Suivant un troisième mode de réalisation, le volet pivotant recouvre en jet direct le panneau coulissant formant un sabot et assure la continuité des lignes aérodynamiques de nacelle à la fois sur la surface externe et sur la surface délimitant le conduit de veine de flux secondaire en se raccordant en amont à la surface interne dudit panneau et en aval à la partie fixe de l'inverseur et en position d'inversion de poussée, ledit panneau après coulissement assure le guidage du flux dévié dans le prolongement du volet qui après pivotement forme l'obstacle au flux inversé.

D'autres caractéristiques et avantages de l'invention seront mieux compris à la lecture de la description qui va suivre des modes de réalisation de l'invention en référence aux dessins annexés sur lesquels :
- la figure 1 représente une demi-vue schématique, en coupe longitudinale par un plan passant par l'axe de rotation d'un turboréacteur associé, d'un inverseur de poussée à portes pivotantes, en position fermée, d'un type connu et qui a fait précédemment l'objet d'une description ;
- la figure 2 représente une vue schématique en perspective d'un inverseur de poussée du type précité montré en position monté et avec des portes fermées ;
- la figure 3 représente, dans une vue analogue à celle de la figure 1, un inverseur de poussée à portes pivotantes, en position de jet direct, selon un premier mode de réalisation de l'invention ;
- la figure 4 représente l'inverseur de poussée de la figure 3 en position de jet inversé ;
- la figure 5 représente l'inverseur de poussée de la figure 3 selon une vue en coupe transversale par un plan passant par la ligne V-V de la figure 3 ;
- la figure 6 montre la partie mobile de l'inverseur de poussée représenté sur la figure 4 selon une vue schématique en perspective de trois quarts avant sans la structure fixe ;
- la figure 7 montre selon une vue schématique en perspective un élément de porte de l'inverseur de poussée représenté sur les figures 3 à 6, constitué par un volet pivotant ;
- la figure 8 montre selon une vue schématique en perspective un élément de porte de l'inverseur de poussée représenté sur les figures 3 à 6, constitué par un panneau coulissant ;
- la figure 9 représente, dans une vue analogue à celle des figures 1 à 3, un inverseur de poussée à portes pivotantes, en position de jet direct, selon un deuxième mode de réalisation de l'invention ;
- la figure 10 représente l'inverseur de poussée de la figure 9 en position de jet inversé ;
- la figure 11 représente, dans une vue analogue à celles des figures 1, 3 et 9, un inverseur de poussée à portes pivotantes, en position de jet direct, selon un troisième mode de réalisation de l'invention ;
- la figure 12 représente l'inverseur de poussée de la figure 11 en position de jet inversé.

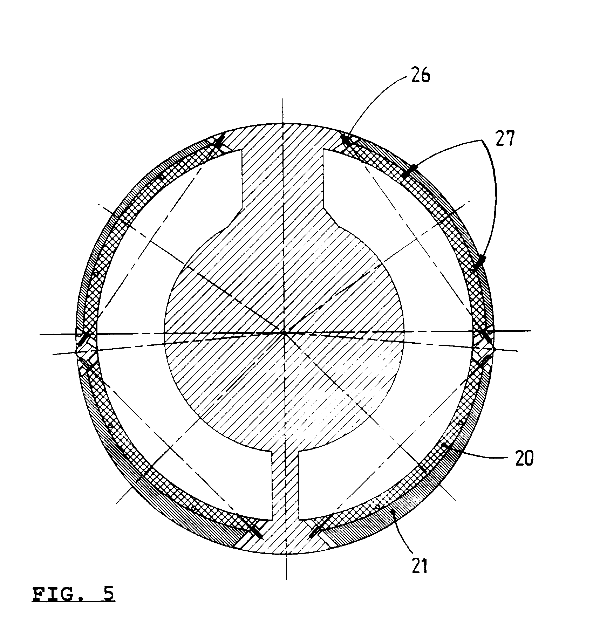

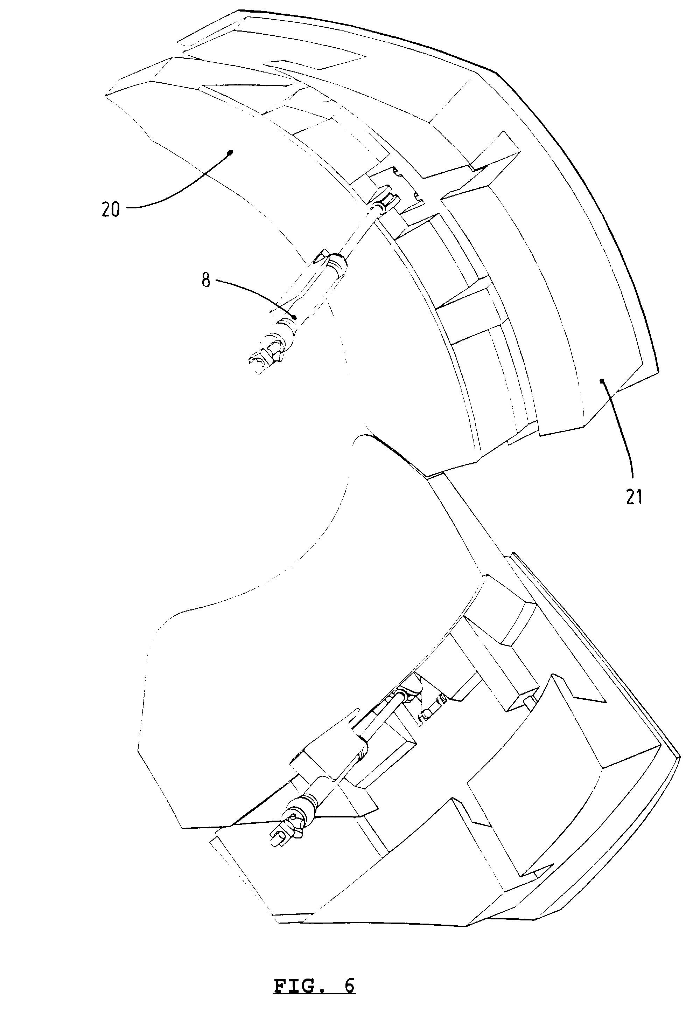

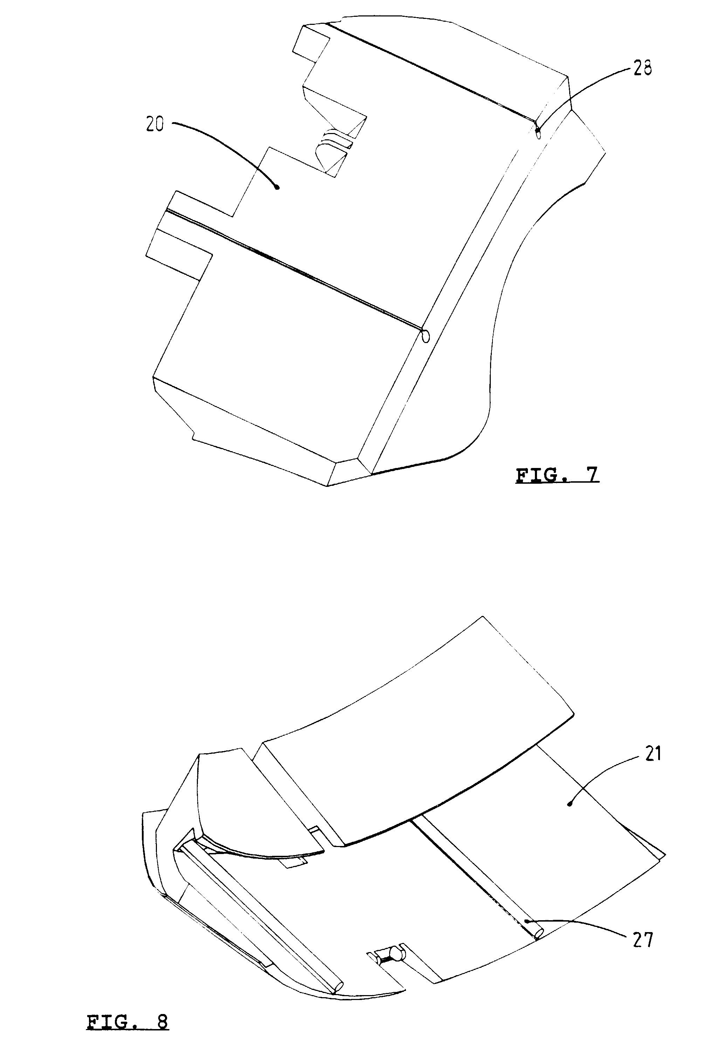

Selon un premier mode de réalisation de l'invention représenté sur les figures 3 à 8, un inverseur de poussée susceptible d'effectuer dans les phases de vol pertinentes d'un avion une inversion de flux du turboréacteur associé comporte les parties principales connues et précédemment décrites dans un exemple connu de réalisation, en référence aux figures 1 et 2. On retrouve notamment la structure fixe amont 1, les portes 7 associées à un vérin de commande 8 et la partie aval 3 de structure fixe.

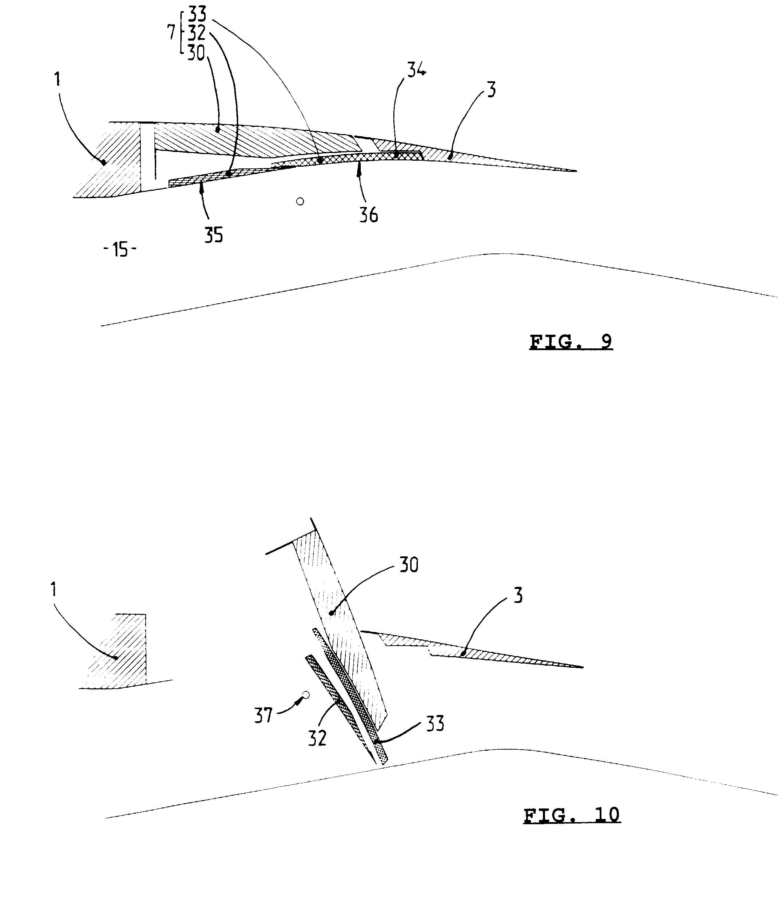

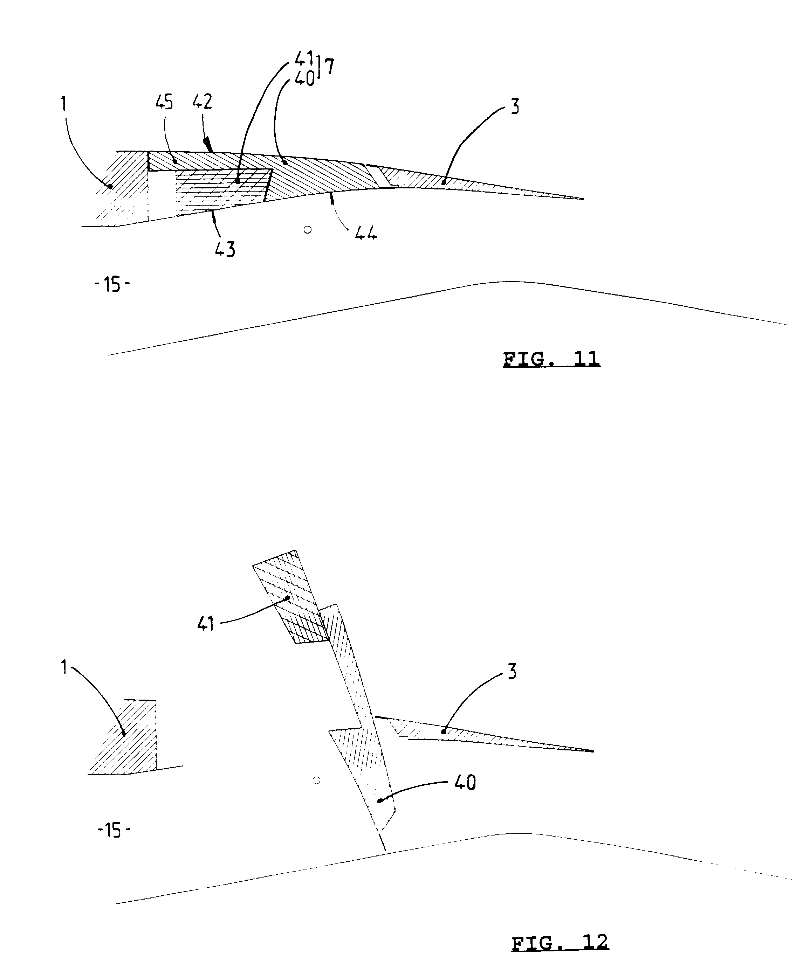

De manière remarquable et conforme à l'invention, la porte 7 est constituée d'un volet pivotant 20 et d'un panneau coulissant 21 présentant une forme dite à sabot. En position de jet direct représentée sur la figure 3, le volet 20 est recouvert par le panneau 21 placé en superposition. La continuité aérodynamique des lignes externes de nacelle entre la structure fixe amont 1 et la partie aval 3 de structure fixe est assurée par la surface extérieure 22 du panneau 21 tandis que le lissage de la veine du flux circulant dans le canal annulaire 15 est assuré au niveau des surfaces intérieures respectives 23 et 24 du panneau 21 et du volet 20, en continuité aérodynamique de la paroi radialement externe du canal 15. Le panneau 21 est relié à la partie aval 33 de structure fixe par une ou plusieurs bielles(s) telle que 25.
Sous l'action des vérins 8, les volets 20 pivotent autour de leurs pivots 26 solidaires de la structure fixe de l'inverseur pour obstruer le canal annulaire 15 et constituer les obstacles de déviation du flux inversé, comme représenté sur les figures 4 et 6, lors du fonctionnement en inversion de poussée. Le volet 20 et le panneau 21 coopèrent au moyen d'un système à rails 27 et glissières 28 visibles sur les figures 7 et 8. De cette manière, lors du pivotement du volet 20, le panneau 21 retenu par la bielle 25 coulisse le long du volet 20 pour prendre la position de guidage et d'inversion de flux représentée sur les figures 4 et 6.

Les figures 9 et 10 montrent un deuxième mode de réalisation de l'invention où l'inverseur de poussée comporte les parties principales précédemment décrites, structure fixe amont 1 et partie aval 3 de structure fixe, portes 7 et vérins de commande. Dans ce cas toutefois, le volet pivotant 30 formant partie de la porte 7 ne forme en jet direct, dans la position représentée sur la figure 9, que les lignes externes de nacelle par sa surface radialement externe 31. Par suite, maintenant le volet 30 recouvre un premier panneau 32 placé en superposition du côté amont et partiellement un deuxième panneau 33 du côté aval. La partie aval 34 du deuxième panneau 33 est recouverte par un élément de la partie aval 3 de structure fixe. Les surfaces intérieures respectives 35 et 36 des panneaux 32 et 33 assurent le lissage de veine et la continuité aérodynamique de la paroi radialement externe du canal annulaire 15.

Lors de l'ouverture de l'inverseur, tandis que le volet 30 pivote autour de ses pivots solidaires de la structure fixe de l'inverseur sous l'action du vérin de commande, le panneau aval 33 coulisse vers le côté amont du volet 30 et vers l'extérieur de la nacelle et le panneau amont 32 coulisse le long du volet 30 vers le côté aval, vers l'axe géométrique de rotation du turboréacteur. En position d'inversion de poussée, représentée sur la figure 10, les panneaux 32 et 33 sont superposés l'un sur l'autre et constituent avec la partie inférieure du volet 30 l'obstacle de déviation du flux tandis que la partie du volet 30 située à l'extérieur de la nacelle assure le guidage et l'inversion du flux inversé. Le coulissement des panneaux 32 et 33 par rapport au volet 30 est obtenu par un moyen connu en soi tel que vérin ou système de bielles non représenté en détails sur les dessins.

Selon le troisième mode de réalisation de l'invention représenté sur les figures 11 et 12, l'inverseur de poussée comporte comme précédemment les parties principales déjà décrites, structure fixe amont 1 et partie aval 3 de structure fixe, portes 7 et vérins de commande. Chaque porte 7, conformément à l'invention est constituée dans ce cas par un volet pivotant 40 et par un panneau 41 formant un sabot coulissant. En position de jet direct représentée sur la figure 11, la partie amont 45 du volet 40 recouvre en superposition le panneau 41. La continuité aérodynamique des lignes externes de nacelle entre la structure fixe amont 1 et la partie aval 3 de structure fixe est assurée par la surface extérieure 42 du volet 40 tandis que le lissage de la veine du flux circulant dans le canal annulaire 15 est assuré au niveau des surfaces intérieures respectives 43 et 44 du panneau 41 et du volet 40, en continuité aérodynamique de la paroi radialement externe du canal 15, ladite surface 43 du panneau 41 étant disposée en amont par rapport à la surface 44 du volet 40. Lors de l'ouverture de l'inverseur, tandis que le volet 40 pivote autour de ses pivots 46 solidaires de la structure fixe de l'inverseur sous l'action du vérin de commande, le panneau 41 coulisse vers la partie supérieure du volet 40, vers l'extérieur de la nacelle. En position d'inversion de flux, comme représenté sur la figure 12, le volet 40 obstrue le canal annulaire 15 et constitue un obstacle de déviation du flux tandis que le panneau 41 assure le guidage et le pilotage des nappes du flux inversé. Le coulissement du panneau 41 par rapport au volet 40 est obtenu grâce à un moyen connu en soi tel que vérin ou système de bielles, non représenté en détails sur les dessins.

## Revendications

1. Inverseur de poussée de turboréacteur à double flux comportant des portes pivotantes (7) susceptibles en position fermée, lors d'un fonctionnement en jet direct, de s'intégrer dans la paroi extérieure du conduit de flux en arrière de la soufflante de turboréacteur et susceptibles en outre chacune de pivoter sous l'action d'un moyen de commande (8) des déplacements de manière à constituer des obstacles de déviation de flux lors d'un fonctionnement en inversion de poussée caractérisé en ce que chaque porte (7) est constituée d'un volet pivotant (20; 30; 40) et d'au moins un panneau (21;32, 33;41) disposé en jet direct au moins partiellement en superposition avec ledit volet (20; 30; 40) et susceptible de coulisser par rapport audit volet de manière à contribuer à la déviation du flux inversé, en position d'inversion de poussée.

2. Inverseur de poussée de turboréacteur double flux selon la revendication 1, dans lequel ledit panneau coulissant (21) présente une forme dite à sabot, recouvre en jet direct ledit volet pivotant (20) et assure la continuité des lignes aérodynamiques de nacelle à la fois sur la surface externe (22) et sur la surface (23) délimitant le canal (15) de veine de flux secondaire en se raccordant en amont à la partie fixe (1) d'inverseur et en aval à la surface interne (24) dudit volet (20).

3. Inverseur de poussée de turboréacteur à double flux selon la revendication 2 dans lequel ledit panneau coulissant (21) est relié par au moins une bielle (25) à la partie aval fixe (3) de l'inverseur, panneau (21) et volet (20) étant munis de rail (27) et glissière (28) coopérant pour assurer le guidage et le coulissement de l'un par rapport à l'autre.

4. Inverseur de poussée de turboréacteur à double flux selon la revendication 1 dans lequel un premier (32) et un deuxième (33) panneaux coulissants sont disposés en jet direct au moins partiellement sous le volet pivotant (30) qui assure la continuité de la ligne externe de nacelle et lors de l'ouverture de l'inverseur, le pivotement du volet (30) est accompagné d'un coulissement du premier panneau (32) vers l'axe géométrique de rotation du turboréacteur et d'un coulissement du deuxième panneau (33) vers l'extérieur de la nacelle, les deux panneaux (32, 33) étant superposés l'un sur l'autre, en position de jet inversé, et constituant avec la partie inférieure du volet (30) l'obstacle de déviation du flux.

5. Inverseur de poussée de turboréacteur à double flux selon la revendication 1 dans lequel le volet pivotant (40) recouvre en jet direct le panneau coulissant (41) formant un sabot et assure la continuité des lignes aérodynamiques de nacelle à la fois sur la surface externe (42) et sur la surface (44) délimitant le canal (15) de veine de flux secondaire en se raccordant en amont à la surface interne (43) dudit panneau (41) et en aval à la partie fixe (3) d'inverseur et en position d'inversion de poussée, ledit panneau (41) après coulissement assure le guidage du flux dévié dans le prolongement du volet (40) qui après pivotement forme l'obstacle au flux inversé.
